Europäisches Patentamt

European Patent Office

Office européen des brevets

(19)

(11) Numéro de publication : **0 329 536 B1**

## FASCICULE DE BREVET EUROPEEN

(12)

(45) Date de publication du fascicule du brevet :
**15.01.92 Bulletin 92/03**

(51) Int. Cl.⁵ : **G21C 5/08,** G21C 7/08

(21) Numéro de dépôt : **89400378.9**

(22) Date de dépôt : **09.02.89**

(54) **Equipements internes supérieurs de réacteur nucléaire muni d'un dispositif de séparation des débits.**

(30) Priorité : **11.02.88 FR 8801647**

(43) Date de publication de la demande :
**23.08.89 Bulletin 89/34**

(45) Mention de la délivrance du brevet :
**15.01.92 Bulletin 92/03**

(84) Etats contractants désignés :
**BE CH DE ES FR GB LI SE**

(56) Documents cités :
**EP-A- 0 238 390
EP-A- 0 240 335
FR-A- 2 382 747
US-A- 4 716 013**

(73) Titulaire : **FRAMATOME
Tour Fiat 1, Place de la Coupole
F-92400 Courbevoie (FR)**

(72) Inventeur : **Chevereau, Gérard
84 Avenue Thiers
F-93340 Le Raincy (FR)**
Inventeur : **Heuze, Alain
39, Rue d'Amsterdam
F-75009 Paris (FR)**

(74) Mandataire : **Fort, Jacques et al
CABINET PLASSERAUD 84, rue d'Amsterdam
F-75009 Paris (FR)**

EP 0 329 536 B1

## Description

L'invention concerne des équipements internes supérieurs de réacteur nucléaire du type comprenant une cuve de résistance à la pression d'un réfrigérant, fermée par un couvercle amovible et comportant au moins une tubulure d'entrée et au moins une tubulure de sortie du réfrigérant située à proximité du couvercle, un coeur constitué d'assemblages combustibles et dans lequel le réfrigérant circule du bas vers le haut, plusieurs grappes de contrôle actionnées par des tiges de commande au travers du couvercle du réacteur, lesdits équipements internes supérieurs comprenant un ensemble de collection du réfrigérant sortant du coeur vers la tubulure de sortie, et un dispositif de séparation des débits d'écoulement du réfrigérant comprenant des guides de grappe de contrôle et de leur tige de commande, interposé entre l'ensemble de collection et le coeur et comprenant une plaque inférieure percée de passages pour le réfrigérant sortant du coeur, une plaque supérieure percée de trous de passage du réfrigérant vers l'ensemble de collection et une virole périphérique non perforée reliant les plaques entre elles.

Elle trouve une application particulièrement importante dans le domaine des réacteurs nucléaires à eau pressurisée, dits PWR, et notamment dans les réacteurs à variation de spectre où les grappes de contrôle comprennent des barres contenant un matériau d'absorption parasite des neutrons, permettant de piloter le réacteur, et des barres de déplacement d'eau, avantageusement contenant du matériau fertile.

On connaît déjà de la demande EP-A-0238390 correspondant à FR-A-2595501 des équipements internes supérieurs de réacteur nucléaire du type ci-dessus défini dont le dispositif séparateur de débit comprend des tubes entretoises reliant les passages du réfrigérant dans les plaques supérieure et inférieure du dispositif, tubes placés entre les guides de grappes. Cette solution résout de nombreux problèmes ; mais les entretoises nombreuses sont difficiles à harmoniser ; et, surtout dans les réacteurs à variation de spectre où les grappes, et donc les guides, sont en nombre élevé, il est difficile de réaliser les structures de guidage des grappes au-dessus du coeur du réacteur.

On connaît également du document EP-A 0222373 un réacteur dans lequel le réfrigérant circule axialement à l'intérieur de capots de guides de grappe. Le réfrigérant à vitesse élevée autour des crayons de grappes risque de faire vibrer ces crayons et l'absence d'entretoises oblige à épaissir énormément la plaque supérieure de coeur.

L'invention vise à fournir des équipements internes supérieurs de réacteur nucléaire répondant mieux que ceux antérieurement connus aux exigences de la pratique, notamment en ce qu'ils permettent un montage aisé des guides de grappe à l'intérieur du dispositif de séparation des débits d'écoulement du réfrigérant.

Dans ce but, l'invention propose notamment des équipements internes de réacteur nucléaire du type ci-dessus défini, caractérisés en ce que chaque guide de grappe du dispositif de séparation des débits comporte une enveloppe externe démunie d'ouvertures de passage du réfrigérant et reliée aux plaques supérieure et inférieure du dispositif de façon étanche.

Dans un mode de réalisation avantageux, au moins certaines des enveloppes sont fixées à l'une des plaques et sont montées coulissantes dans l'autre plaque, de façon à permettre la libre dilatation desdites enveloppes dans le sens axial.

L'invention sera mieux comprise à la lecture de la description qui suit d'un mode particulier de réalisation, donné à titre d'exemple non limitatif. La description se réfère aux dessins qui l'accompagnent dans lesquels :

— la Figure 1 est un schéma d'ensemble d'un réacteur muni d'équipements internes supérieurs selon l'invention, en coupe partielle suivant un plan vertical ;

— la Figure 2 est une vue schématique à grande échelle, en coupe suivant un plan vertical, des équipements internes supérieurs selon l'invention ;

— la Figure 3 est une coupe verticale montrant une constitution possible d'une partie de la zone de sortie du réfrigérant du dispositif de séparation des débits conforme au schéma de la Figure 2 ;

— la Figure 4 est une vue en coupe verticale d'une partie de la plaque inférieure de séparation des débits au niveau de la jonction coulissante avec un guide de grappe selon une disposition avantageuse de l'invention ;

— la Figure 5 est une demi-coupe d'un guide de grappe suivant la ligne V-V de la Figure 2.

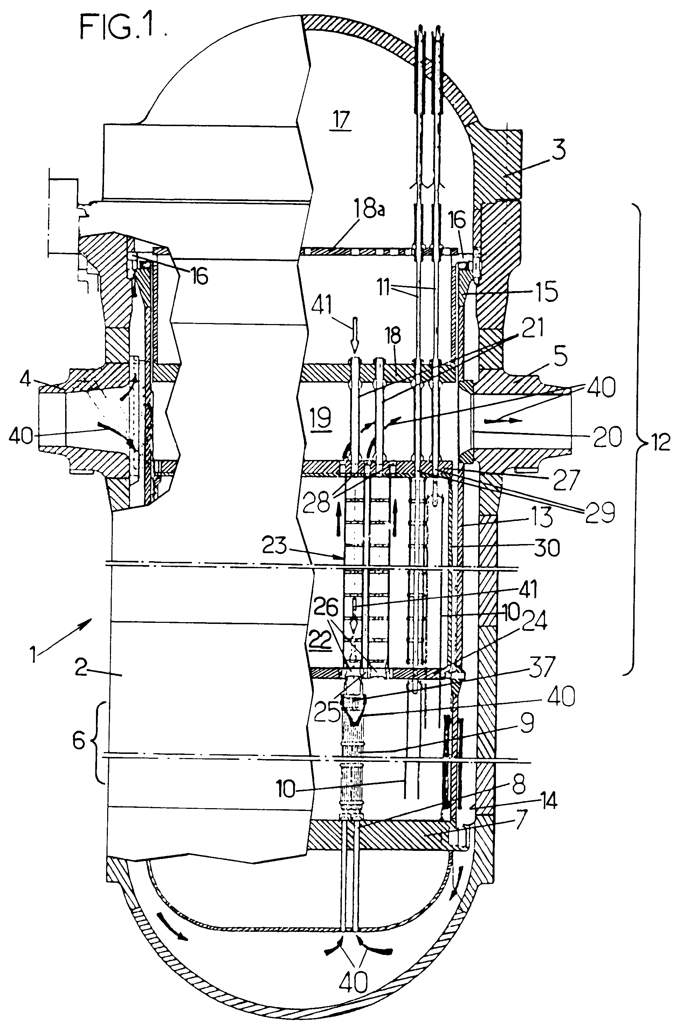

Le réacteur à eau pressurisée 1 montré en Figure 1 a une constitution générale similaire à celle décrite dans le document EP-A-0238390 auquel on pourra se reporter. Il comprend une cuve 2 de résistance à la pression de l'eau constituant réfrigérant, fermée par un couvercle amovible 3 et comportant des tubulures d'entrée 4 et des tubulures de sortie 5 du réfrigérant, et un coeur 6 porté par une plaque support inférieure 7 percée de trous 8 de passage du réfrigérant de bas en haut vers les assemblages combustibles du coeur, tel que l'assemblage 9. Des grappes de contrôle 10 sont déplaçables verticalement par des tiges de commande 11 traversant le couvercle 3 du réacteur 1. Ces grappes peuvent être de deux types différents. Les unes contiennent un matériau absorbant et servent au pilotage. Les autres contiennent du matériau fertile. Lorsqu'elles sont retirées du coeur après irradiation, elles dégagent de la chaleur du fait des fissions qui s'y produisent et doivent être refroidies par circulation de réfrigérant. La Figure 1 montre seulement deux grappes et leurs tiges 11.

Le réacteur comporte également des équipements internes supérieurs 12 interposés entre le coeur 6 et le couvercle 3. Une enveloppe externe cylindrique 13, espacée de la surface intérieure 14 de la cuve 2 et munie d'une bride supérieure 15 permettant de la suspendre par pincement entre le couvercle 3 et la cuve 2, canalise le flux du réfrigérant entrant par les tubulures 4 et le dirige le long de la surface intérieure 14 de la cuve 2 d'où il pénètre dans le coeur 6 par la partie basse des assemblages 9.

Des moyens de passage 16 sont ménagés au niveau de la bride 15 pour dériver un faible débit de réfrigérant arrivant par l'entrée 4 vers le volume 17 délimité par le couvercle 3 du réacteur 1 et par la partie haute des équipements internes supérieurs 12 du réacteur. Cette partie haute comporte un support de guides de grappe 18 en forme de chapeau renversé et une entretoise 18a de guidage des tiges de commande ou de leurs fourreaux.

Un ensemble de collection 19 du réfrigérant sortant du coeur permet de conduire transversalement ce dernier vers des échangeurs de chaleur extérieurs au réacteur par les tubulures de sortie 5, à travers des trous 20 de l'enveloppe cylindrique 13 disposés au droit des tubulures de sortie 5. L'ensemble 19 comporte des tubes de guidage 21 livrant passage aux tiges de commande 11 des grappes 10 et séparant l'espace entourant les tiges des turbulences du réfrigérant en écoulement vers les tubulures de sortie 5.

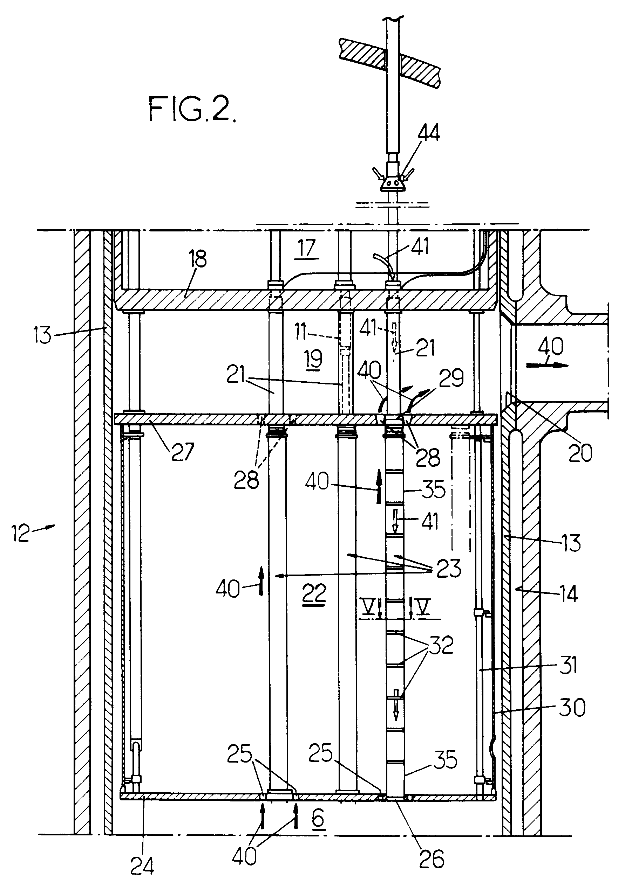

Les équipements internes supérieurs 12 comprennent de plus un dispositif 22 de guidage de grappe et de séparation des débits (Figure 2) disposé entre le coeur 6 et l'ensemble de collection 19.

Le dispositif 22 comprend une plaque inférieure 24 percée de trous 25 de passage du réfrigérant sortant du coeur 6 vers le dispositif 22 et percée de trous 26 de passage des grappes de contrôle 10. Il comprend également une plaque supérieure 27 percée de trous 28 de passage du réfrigérant vers l'ensemble de collection 19 et de trous 29 de passage des tiges de commande 11, alignés verticalement avec les tubes de guidage 21 et les trous 26. Des guides 23 mettent en communication les trous de passage 26 et 29.

Les deux plaques 24 et 27 de ce dispositif sont reliées à leur périphérie par une virole 30 de sorte que l'ensemble du dispositif 22 constitue un caisson. La rigidité du caisson est augmentée par des éléments mécaniques qui les relient. Ces éléments peuvent comporter des entretoises 31 fixées rigidement aux plaques 24 et 27, et dont une est représentée sur la Figure 2. Il est évidemment également possible d'utiliser plus simplement certains des guides 23 en tant qu'entretoises, en les fixant rigidement aux plaques 24 et 27.

Le dispositif 22 de séparation des débits comprend, de plus, les guides 23 destinés à protéger les grappes 10 et les tiges de commande 11 contre l'écoulement du réfrigérant à travers le dispositif 22 vers l'ensemble 19.

Les guides de grappe 23 sont par exemple des ensembles soudés (Figure 5) constitués par des plaquettes horizontales perforées 32 ou "cartes" étagées verticalement et par des fourreaux de guidage 33 continus et des profilés carrés 34 s'étendant sur toute la hauteur du guide de grappes et entretoisant les plaquettes 32. Selon l'invention chaque guide de grappe comporte également une enveloppe 35 externe démunie de trous de passage du réfrigérant et reliée aux plaques inférieure 24 et supérieure 27 de façon sensiblement étanche. Le canal délimité par cette enveloppe débouche vers le haut dans celui constitué par un des tubes de guidage 21 qui se prolonge au-delà du support 18 et communique avec le volume 17 directement (Figure 1) ou par des trous calibrés, comme on le verra plus loin.

L'enveloppe 35 peut, par exemple, présenter un contour sensiblement hexagonal, surtout dans le cas d'un réseau serré. Cependant, d'autres formes sont possibles, notamment circulaire et carrée. Les profilés carrés 34 et/ou les fourreaux de guidage 33 peuvent être fixés sur l'enveloppe externe 35 de toute façon connue, par exemple par des cordons de soudure 37. Mais les plaquettes 32 peuvent elles aussi être fixées en butée radiale sur l'enveloppe 35, par exemple à l'aide de cales supplémentaires soudées.

Un guidage continu de toutes les grappes n'est pas toujours nécessaire : dans certains cas, il suffit de prévoir des tubes fendus s'étendant sur toute la hauteur des guides de grappe 23 pour guider une partie seulement des crayons de grappe. Les plaquettes perforées 32 étagées peuvent être fixées, par exemple par des pions, directement sur l'enveloppe extérieure 35, les profilés carrés 34 étant omis.

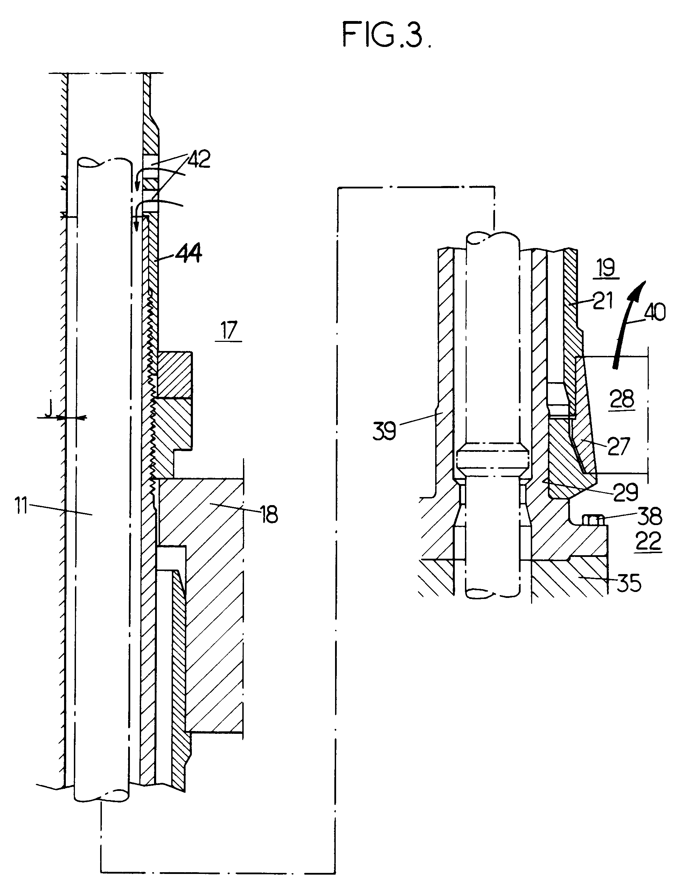

La Figure 3 montre une constitution possible de la jonction d'un tube de guidage de grappe 21 avec la plaque supérieure 27. Dans cette construction, le tube 21 est composite. Il comprend un tube guide proprement dit 21, dont la longueur est du même ordre que la distance entre les plaques 18 et 27, et une chemise interne 39 qui fait saillie au-dessous de la plaque supérieure 27 et se prolonge vers le haut jusqu'au-dessus de l'entretoise 18a.

Autour de chaque tube de guidage 21 sont percés plusieurs trous 28 de passage du réfrigérant, quatre ou six trous par exemple, disposés régulièrement autour du trou 29.

Le haut de l'enveloppe 35 de chaque guide de grappe peut être fixé rigidement, par exemple par des écrous 38, sur la partie inférieure de la chemise interne 39 correspondante.

Comme on l'a indiqué plus haut, les guides 23 peuvent constituer des entretoises de jonction des plaques 24 et 27 : ils sont alors fixés rigidement à ces plaques. Mais, surtout dans un réacteur à variation de spectre, ces guides sont en nombre surabondant. Il est alors avantageux de ne fixer certaines des enveloppes qu'à une seule plaque, par exemple par soudure, et de les monter coulissantes dans l'autre plaque de façon à permettre la libre dilatation différentielle de l'enveloppe dans le dispositif de séparation 22. Cette disposition facilite de plus le montage des enveloppes, qui peuvent avoir des longueurs variables du fait des tolérances de fabrication.

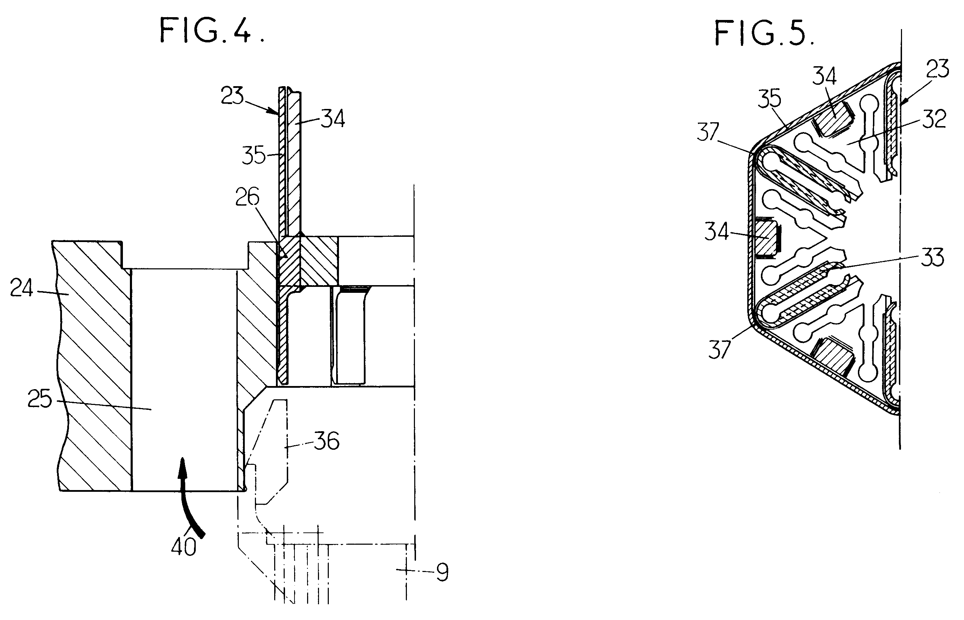

La Figure 4 montre, à titre d'exemple nullement limitatif, un mode de réalisation de cette jonction coulissante ; l'enveloppe 35 présente une partie terminale qui coulisse à frottement doux dans le trou 26 : elle peut ainsi se dilater dans la plaque inférieure 24. Chaque trou 26 reçoit par en-dessous l'embout supérieur 36 d'un assemblage combustible correspondant 9. Dans cet embout est pratiquée une ouverture de passage de forme correspondant à celle des crayons de la grappe, de sorte que, lorsque celle-ci est insérée, l'écoulement ascendant de réfrigérant est défléchi en quasi-totalité comme indiqué par la flèche 40.

Comme le montre la Figure 3, les diamètres de la tige 11 et de la chemise 39 sont proportionnés de façon à laisser subsister un jeu radial j de quelques millimètres de communication entre le volume 17 et chaque guide de grappe. Un rétrécissement local de la chemise peut cependant être prévu pour recevoir un renflement de la tige lorsque cette dernière arrive dans la position basse montrée en traits mixtes sur la Figure 3. Le jeu peut être plus important pour les tiges de barres fertiles de variation de spectre, qui exigent d'être plus refroidies que les barres absorbantes.

Dans le cas illustré sur la Figure 3, le jeu est alimenté en particulier par des trous 42 percés dans la partie haute de la chemise 39, constituée de plusieurs pièces raccordées par une liaison filetée. Sur la Figure 3, le jeu est alimenté par des trous percés dans une manchette de protection thermique 44 de constitution par ailleurs connue.

Le fonctionnement normal du réacteur nucléaire comprenant des équipements internes tels que décrits dans l'invention est le suivant. Des flèches en traits pleins 40 indiquent sur les Figures 1, 2, 3 et 4 les trajets suivis par le flux principal du réfrigérant.

Le réfrigérant froid entre dans le réacteur 1 par les tubulures d'entrée 4. Il est dévié en majeure partie par l'enveloppe extérieure 13, vers le bas du réacteur, puis il circule de bas en haut à travers les assemblages 9 du coeur 6 du réacteur. Le flux sortant d'un assemblage 9 est dévié par l'embout supérieur 36 vers les trous 25 débouchant dans le dispositif 22, entre les guides de grappe 23. Le réfrigérant traverse alors le dispositif 22 entre les enveloppes 35 des guides de grappes 23 et ressort dans l'ensemble de collection 19 par les trous 28. Il y est dévié entre les tubes-guides 21 des tiges de commande 11, traverse l'enveloppe 13 par les trous 20 et sort du réacteur par les tubulures de sortie 5.

Le réfrigérant sortant des assemblages est donc isolé sur tout son parcours des volumes de réfrigérant environnant les grappes de contrôle et leurs tiges de commande 11, contenues dans les enveloppes 35 qui les séparent de façon pratiquement étanche du reste du dispositif 22, et dans les tubes-guides 21 qui les séparent du réfrigérant circulant dans l'ensemble 17.

Mais les canaux ainsi constitués par les enveloppes 35 et les tubes 21 sont reliés directement à la capacité 17 située sous le couvercle du réacteur, en légère surpression par rapport au réfrigérant sortant des assemblages.

Un courant axial descendant de réfrigérant, représenté par des flèches blanches 41 sur les Figures 1 et 2, est donc présent dans les tubes 21 et les enveloppes 35. Il refroidit les grappes, ce qui est important si certaines d'entre elles sont des grappes fertiles, comme c'est le cas pour un réacteur à variation de spectre. Ce courant constitue de plus une aide à la chute des grappes, ce qui va dans le sens de la sureté nucléaire.

Les moyens de passage 16 permettant à un faible débit de réfrigérant froid d'accéder à la capacité 17 située sous le couvercle du réacteur peuvent être de simples conduits traversant la bride 15.

## Revendications

1. Equipements internes supérieurs (12) de réacteur nucléaire (1) comprenant une cuve (2) de résistance à la pression d'un réfrigérant, fermée par un couvercle (3) amovible et comportant au moins une tubulure d'entrée (4) et au moins une tubulure de sortie (5) du réfrigérant situées à proximité du couvercle, un coeur (6) constitué d'assemblages combustibles (9) et dans lesquels le réfrigérant circule du bas vers le haut, des grappes de contrôle (10) actionnées par des tiges (11) de commande traversant le couvercle (3) du réacteur, lesdits équipements internes supérieurs (12) comprenant : un ensemble de collection (19) du réfrigérant sortant du coeur (6) vers la tubulure de sortie (5) et comportant des tubes de guidage desdites tiges de commande ; un dispositif (22) de séparation des débits d'écoulement du réfrigérant comprenant des guides (23) des grappes de contrôle et de leurs tiges de commande dans leurs déplacements verticaux, interposé entre ledit ensemble de collection (19) et le coeur (6) et comprenant une plaque inférieure (24) percée de passages (25) pour le réfrigérant sortant du coeur, une plaque supérieure (27) percée de trous de passage du réfrigérant vers l'ensemble de collection (19) et une virole périphérique (30) reliant les plaques (24, 27) entre elles ; **caractérisés en ce que** chaque guide (23) de grappe du dispositif (22) de séparation des débits comporte une enveloppe externe (35) démunie de trous, reliée auxdites plaques (24, 27) de façon étanche et reliée à un tube de guidage, à paroi non perforée, de façon étanche, les tubes de guidage étant reliés à un volume situé sous le couvercle et alimenté en réfrigérant depuis la tubulure d'entrée.

2. Equipements internes supérieurs selon la revendication 1, caractérisés en ce que certaines au moins des enveloppes (35) sont fixées à l'une des plaques (24, 27) et sont montées coulissantes dans l'autre plaque (27, 24) de façon à permettre leur dilatation.

3. Equipements internes supérieurs selon la revendication 1 ou 2, caractérisés en ce que les enveloppes (35) sont de contour hexagonal.

4. Equipements internes supérieurs de réacteur nucléaire selon l'une quelconque des revendications précédentes comprenant une enveloppe externe cylindrique (13) espacée de la surface intérieure (14) de la cuve de façon à permettre au fluide réfrigérant entrant par la tubulure d'entrée (4) de circuler entre la cuve (2) et l'enveloppe externe cylindrique (13) pour pénétrer dans le coeur (6) par la partie basse des assemblages (9), reliée à la cuve par une bride (15) caractérisés en ce qu'ils comprennent des moyens ménagés à travers la bride pour amener du réfrigérant froid, à pression supérieure à celle du réfrigérant qui sort du coeur, au-dessus des tubes de guidage des tiges de commande.

5. Equipements internes supérieurs de réacteur nucléaire selon l'une quelconque des revendications précédentes, caractérisés en ce que chacun des guides (23) de grappe dans le dispositif de séparation (22) comprend des plaquettes (32) transversales de guidage réparties à plusieurs niveaux, certaines plaquettes au moins étant fixées sur l'enveloppe.

**Patentansprüche**

1. Obere Einbauten (12) eines Kernreaktors (1) mit einem Kühlmitteldruckgefäß (2), das mit einem abnehmbaren Deckel (3) verschlossen ist und wenigstens einen Kühlmittelzulauf (4) und wenigstens einen Kühlmittelablauf (5), die in der Nähe des Deckels angeordnet sind, aufweist, einem Kern (6), der aus Kernbrennelementen (9) gebildet ist, in denen das Kühlmittel von unten nach oben fließt, Steuergruppen (10), die mit den Deckel (3) des Reaktors durchdringenden Steuerstangen (11) betätigt werden, wobei die oberen Einbauten (12) eine Sammeleinheit (19) für das aus dem Kern (6) zum Ablaufrohr (5) fließende Kühlmittel mit Führungsrohren für die Steuerstangen und eine Durchflußtrennungseinrichtung (22) für das Kühlmittel mit Führungen (23) für die Steuergruppen und deren Steuerstangen in deren vertikalen Verstellwegen, die zwischen der Sammeleinheit (19) und dem Kern (6) angeordnet ist und eine mit Öffnungen (25) für das aus dem Kern kommende Kühlmittel versehene untere Platte (24), eine mit Durchgangslöchern für das Kühlmittel zur Sammeleinheit (19) versehenen obere Platte (27) und einen die Platten (24, 27) miteinander verbindenden Umfangsring (30) aufweist, aufweisen, **dadurch gekennzeichnet,**
daß jede Führung (23) einer Steuergruppe der Durchflußtrennungseinrichtung (22) eine mit Löchern versehene äußere Umhüllung (35) aufweist, die mit den Platten (24, 27) dicht verbunden ist und die mit einem Führungsrohr mit nicht durchlöcherter Wandung dicht verbunden ist, wobei die Führungsrohre mit einem unterhalb des Deckels angeordneten Raum verbunden sind, der von einem Zulauf mit Kühlmittel versorgt wird.

2. Obere Einbauten nach Anspruch 1, **dadurch gekennzeichnet**, daß wenigstens einige der Umhüllungen (35) an einer der Platten (24, 27) befestigt sind und an der anderen Platte gleitbar angeordnet sind, um deren Ausdehnung zu ermöglichen.

3. Obere Einbauten nach Anspruch 1 oder 2, **dadurch gekennzeichnet**, daß die Umhüllungen (35) von sechseckiger Form sind.

4. Obere Einbauten nach einem der vorangehenden Ansprüche mit einer zylindrischen äußeren Umhüllung (13), die zu der inneren Oberfläche (14) des Gefäßes derart beabstandet ist, daß die durch das Zulaufrohr (4) eintretende Kühlflüssigkeit zwischen dem Gefäß (2) und der zylindrischen äußeren Umhüllung (13) fließen kann, um durch den unteren Teil der Brennelemente (9) in den Kern (6) einzudringen, und die mit dem Gefäß über einen Flansch (15) verbunden ist, **dadurch gekennzeichnet**, daß sie quer über den Flansch angeordnete Mittel zum Zuführen des kühlen Kühlmittels mit einem höheren Druck als dem des den Kern verlassenden Kühlmittels oberhalb der Führungsrohre der Steuerstange aufweisen.

5. Obere Einbauten eines Kernreaktors nach einem der vorangehenden Ansprüche, **dadurch gekennzeichnet**, daß jede der Führungen (23) der Steuergruppen in der Trennungseinrichtung (22) querliegende Führungsplatten (32) aufweist, die über mehrere Ebenen verteilt sind, wobei wenigstens einige Platten an der Umhüllung befestigt sind.

**Claims**

1. Upper internal equipments (12) for a nuclear reactor (1) comprising a coolant pressure vessel (2) closed by a removable cover (3) and including at least one input nozzle (4) and at least one output nozzle (5) for the coolant, situated in the vicinity of the cover, a core (6) formed of fuel assemblies (9) and in which the coolant flows upwardly, control clusters (10) actuated by drive shafts (11) projecting through the cover (3) of the reactor, said upper internal equipements (12) including : an assembly (19) for collecting the coolant leaving the core (6) in the direction of the output nozzle (5) and having tubes for guiding said drive shafts ; a device (22) for separating the coolant flows, including guides (23) for the control clusters and their drive shafts in their vertical movements, inserted between said collection assembly (19) and the core (6) and including a lower plate (24) formed with passages (25) for the coolant leaving the core, an upper plate (27) formed with holes for passage of the coolant towards the collection assembly (19) and a peripheral shroud (30) connecting the plates (24, 27) together ; characterized in that each cluster guide (23) of the flow separation device (22) includes an external casing (35) without openings, sealingly connected to said plates (24, 27) and sealingly connected to a guide tube having an unperforated wall, the guide tubes being connected to a volume located under the cover and fed with coolant from the input nozzle.

2. Upper internal equipments according to claim 1, characterized in that at least some of the casings (35) are fixed to one of the plates (24, 27) and are slidable in the other plate (27, 24), so as to allow free expansion thereof.

3. Upper internal equipment according to claim 1 or 2, characterized in that the casings (35) have an hexagonal contour.

4. Upper internal equipments for a nuclear reactor according to any one of the preceding claims, including an external cylindrical casing (13) spaced from the internal surface (14) of the vessel so as to allow the coolant fluid entering through the inlet nozzle (4) to flow between the vessel (2) and the external cylindrical casing (13) and to enter the core (6) through the lower parts of the assemblies (9) connected to the vessel by a flange (15), characterized in that they comprise means formed through the flange for bringing cold coolant, at a pressure higher than that of the coolant which leaves the core, above the guide tubes of drive shafts.

5. Upper internal equipments for a nuclear reactor according to any one of the preceding claims, characterized in that each of the cluster guides (23) in the separation device (22) comprises transverse guide plates (32) distributed at a plurality of levels, at least some plates being fixed to the casing.

FIG.1.

FIG.2.

# FIG.3.

EP 0 329 536 B1

FIG.5.

23
32
33
34
35
34
37
37

FIG.4.

34
23
35
26
36
9
40
24
25

10